# EUROPEAN PATENT APPLICATION

(11) **EP 4 170 250 A1**
(43) Date of publication of application: **26.04.2023**
(21) Application number: 21870919.4
(22) Date of filing: 30.06.2021
(51) Int. Cl.: F24F 11/00

(54) **AIR CONDITIONER, AND METHOD FOR CONTROLLING ELECTRONIC EXPANSION VALVE OF INDOOR UNIT THEREOF, AND DEVICE**

(30) Priority: 28.09.2020 CN 202011047418
(71) Applicant: GD Midea Air-Conditioning Equipment Co., Ltd., Foshan, Guangdong 528311 (CN)
(72) Inventor: ZHONG, Wenchao, Foshan, Guangdong 528311 (CN)
(74) Representative: Whitlock, Holly Elizabeth Ann
(86) International application number: PCT/CN2021/103490
(87) International publication number: WO 2022/062540

(57) **Abstract**

The present application discloses an air conditioner and a method for controlling an electronic expansion valve of an indoor unit thereof, a device and a computer readable storage medium. Said method comprises: after an air conditioner is started, monitoring changes of a refrigerant on an indoor side in real time; determining, on the basis of the changes of the refrigerant on the indoor side, whether an outdoor unit of the air conditioner enters an oil return state; and if it is determined that the outdoor unit of the air conditioner enters the oil return state, adjusting the electronic expansion valve of the indoor unit of the air conditioner to adapt to the oil return of the outdoor unit of the air conditioner.

## Description

### CROSS-REFERENCE TO RELATED DISCLOSURES

This application claims priority to Chinese Patent Application No. 202011047418.X, filed on September 28, 2020, the entire contents of which are incorporated herein by reference.

### TECHNICAL FIELD

The present disclosure relates to the technical field of air conditioners, in particular to a method and a device for controlling an electronic expansion valve of an air conditioner indoor unit, and a computer-readable storage medium.

### BACKGROUND

When the air conditioner indoor unit and the air conditioner outdoor unit do not communicate with each other, the air conditioner indoor unit cannot directly acquire the information of whether the air conditioner outdoor unit enters the oil return state. In this case, if the air conditioner outdoor unit enters the oil return state, the air conditioner indoor unit will still operate in a normal mode, and then the electronic expansion valve of the air conditioner indoor unit will not be adjusted accordingly, which not only leads to poor oil return for a long time, but also causes the compressor to wear, or makes the temperature and pressure of the whole machine too high to cause shutdown and reduce the reliability of the device.

### SUMMARY

The embodiment of the present disclosure provides a method for controlling an electronic expansion valve of an air conditioner indoor unit, aiming to solve the problem that when the air conditioner outdoor unit enters an oil return state, the compressor is prone to wear and the operating reliability of the air conditioner is reduced.

To achieve the above objectives, the embodiment of the present disclosure provides a method for controlling an electronic expansion valve of an air conditioner indoor unit. The method for controlling an electronic expansion valve of an air conditioner indoor unit includes:
after an air conditioner is turned on, monitoring an indoor refrigerant change in real time;
determining whether an air conditioner outdoor unit enters an oil return state according to the indoor refrigerant change; and
when determining that the air conditioner outdoor unit enters the oil return state, adjusting the electronic expansion valve of the air conditioner indoor unit to adapt to the oil return state of the air conditioner outdoor unit.

In an embodiment, monitoring a first change in temperature of an indoor heat exchanger and a second change in temperature of a low-pressure pipe connecting the indoor heat exchanger with a compressor in real time, to determine the indoor refrigerant change; and
determining whether the air conditioner outdoor unit enters the oil return state according to the indoor refrigerant change includes determining whether any one of the first change and the second change meets a preset condition of the air conditioner outdoor unit entering the oil return state.

In an embodiment, determining whether the first change meets the preset condition of the air conditioner outdoor unit entering the oil return state includes:
in a cooling mode, acquiring a first temperature of the indoor heat exchanger every first preset time; and
between any two adjacent first temperatures, when a decrease value of a latter first temperature compared to a previous first temperature is greater than a first preset threshold, determining that the air conditioner indoor unit enters an oil return state;
   and/or,
in a heating mode, acquiring a second temperature of the indoor heat exchanger every second preset time; and
between any two adjacent second temperatures, when an increase value of a latter second temperature compared to a previous second temperature is greater than a second preset threshold, determining that the air conditioner indoor unit enters the oil return state.

In an embodiment, determining whether the second change meets the preset condition of the air conditioner outdoor unit entering the oil return state includes:
in the cooling mode, acquiring a third temperature of the low-pressure pipe every third preset time; and
when an air-out speed of the air conditioning indoor unit remains unchanged, and between any two adjacent third temperatures, a decrease value of a latter third temperature compared to a previous third temperature is greater than a third preset threshold, determining that the air conditioner indoor unit enters the oil return state;
   and/or,
in the heating mode, acquiring a fourth temperature of the low-pressure pipe every fourth preset time; and
when the air-out speed of the air conditioning indoor unit remains unchanged, and between any two adjacent fourth temperatures, an increase value of a latter fourth temperature compared to a previous fourth temperature is greater than a fourth preset threshold, determining that the air conditioner indoor unit enters the oil return state.

In an embodiment, the when determining the air conditioner outdoor unit enters the oil return state, adjusting the electronic expansion valve of the air conditioner indoor unit to adapt to the oil return state of the air conditioner outdoor unit includes:
when determining that the air conditioner outdoor unit enters the oil return state in the cooling mode, adjusting an opening degree of the electronic expansion valve of the air conditioner indoor unit according to a first preset parameter; and
when determining that the air conditioner outdoor unit enters the oil return state in the heating mode, adjusting the opening degree of the electronic expansion valve of the air conditioner indoor unit according to a second preset parameter.

In an embodiment, the method for controlling the electronic expansion valve of the air conditioner indoor unit further includes:
after determining that the air conditioner outdoor unit enters the oil return state, determining whether the air conditioner outdoor unit exits the oil return state according to the indoor refrigerant change; and
when determining that the air conditioner outdoor unit exits the oil return state, automatically controlling, by an automatic control program of the electronic expansion valve of the air conditioner indoor unit, the electronic expansion valve of the air conditioner indoor unit.

In an embodiment, the determining whether the air conditioner outdoor unit exits the oil return state according to the indoor refrigerant change includes:
determining whether any one of the first change in temperature of the indoor heat exchanger and the second change in temperature of the low-pressure pipe connecting the indoor heat exchanger with the compressor meets a preset condition of the air conditioner outdoor unit exiting the oil return state.

In an embodiment, he determining whether the first change in temperature of the indoor heat exchanger meets the preset condition of the air conditioner outdoor unit exiting the oil return state includes:
in the cooling mode, acquiring a fifth temperature of the indoor heat exchanger every fifth preset time; and
between any two adjacent fifth temperatures, when an increase value of a latter fifth temperature compared to a previous fifth temperature is greater than a fifth preset threshold, determining that the air conditioner indoor unit exits the oil return state;
   and/or,
in an embodiment, determining whether the second change in temperature of the low-pressure pipe connecting the indoor heat exchanger with the compressor meets the preset condition of the air conditioner outdoor unit exiting the oil return state includes:
in the heating mode, acquiring a sixth temperature of the low-pressure pipe every sixth preset time; and
between any two adjacent sixth temperatures, when a decrease value of a latter sixth temperature compared to a previous sixth temperature is greater than a sixth preset threshold, determining that the air conditioner indoor unit exits the oil return state.

In an embodiment, the method for controlling the electronic expansion valve of the air conditioner indoor unit further includes:
after determining that the air conditioner outdoor unit enters the oil return state, counting an operating time of the air conditioner after the air conditioner outdoor unit enters the oil return state, and determining whether the air conditioner outdoor unit exits the oil return state according to the operating time.

In an embodiment, the controlling, by the automatic control program of the electronic expansion valve of the air conditioner indoor unit, the electronic expansion valve of the air conditioner indoor unit includes:
when determining that the air conditioner outdoor unit exits the oil return state according to the indoor refrigerant change, adjusting a step of the electronic expansion valve of the air conditioner indoor unit to another step before the air conditioner outdoor unit enters the oil return state, then automatically controlling, by the automatic control program, the electronic expansion valve of the air conditioner indoor unit.

In an embodiment, the method is applied to the air conditioner in which the air conditioner indoor unit and the air conditioner outdoor unit operate independently of each other.

To achieve the above objectives, the embodiment of the present disclosure further provides an air conditioner including:
a monitoring module, configured to monitor an indoor refrigerant change in real time after the air conditioner is turned on;
a determining module, configured to determine whether an air conditioner outdoor unit enters an oil return state according to the indoor refrigerant change; and
an adjustment module, configured to adjust an electronic expansion valve of an air conditioner indoor unit to adapt to the oil return state of the air conditioner outdoor unit after determining that the air conditioner outdoor unit enters the oil return state.

To achieve the above objectives, the embodiment of the present disclosure further provides a device for controlling an electronic expansion valve of an air conditioner indoor unit. The device for controlling an electronic expansion valve of an air conditioner indoor unit includes a memory, a processor, and a control program of the electronic expansion valve of the air conditioner indoor unit stored in the memory and executable on the processor, when the control program of the electronic expansion valve of the air conditioner indoor unit is executed by the processor, the method for controlling the electronic expansion valve of the air conditioner indoor unit as mentioned above is implemented.

To achieve the above objectives, the embodiment of the present disclosure further provides a computer-readable storage medium. A control program of an electronic expansion valve of an air conditioner indoor unit is stored in the computer-readable storage medium, when the control program of the electronic expansion valve of the air conditioner indoor unit is executed by a processor, the method for controlling the electronic expansion valve of the air conditioner indoor unit as mentioned above is implemented.

The method for controlling the electronic expansion valve of the air conditioner indoor unit in the present disclosure includes: after the air conditioner is turned on, monitoring an indoor refrigerant change in real time to determine whether an air conditioner outdoor unit enters an oil return state, and after determining that the air conditioner outdoor unit enters the oil return state, adjusting the electronic expansion valve of the air conditioner indoor unit to adapt to the oil return state of the air conditioner outdoor unit. In this way, when the air conditioner outdoor unit enters the oil return state, the electronic expansion valve of the air conditioner indoor unit can be adjusted in time to avoid poor oil return of the air conditioner. Compared with the air conditioner in which the air conditioner indoor unit cannot adjust the electronic expansion valve in time when the air conditioner outdoor unit enters the oil return state, the method for controlling the electronic expansion valve of the air conditioner indoor unit in the present disclosure not only can prolong the service life of the compressor, but also can improve the operating reliability of the air conditioner.

### BRIEF DESCRIPTION OF THE DRAWINGS

To illustrate the technical solutions according to the embodiments of the present disclosure or the related art more clearly, the accompanying drawings for describing the embodiments or the related art are introduced briefly in the following. Apparently, the accompanying drawings in the following description are only some embodiments of the present disclosure. Persons of ordinary skill in the art can derive other drawings from the structures of the accompanying drawings without creative efforts.
FIG. 1 is a module structure diagram of a device for controlling an electronic expansion valve of an air conditioner indoor unit according to an embodiment of the present disclosure.
FIG. 2 is a schematic flowchart of a method for controlling the electronic expansion valve of the air conditioner indoor unit according to an embodiment of the present disclosure.
FIG. 3 is another schematic flowchart of the method for controlling the electronic expansion valve of the air conditioner indoor unit according to an embodiment of the present disclosure.
FIG. 4 is yet another schematic flowchart of the method for controlling the electronic expansion valve of the air conditioner indoor unit according to an embodiment of the present disclosure.
FIG. 5 is yet another schematic flowchart of the method for controlling the electronic expansion valve of the air conditioner indoor unit according to an embodiment of the present disclosure.
FIG. 6 is yet another schematic flowchart of the method for controlling the electronic expansion valve of the air conditioner indoor unit according to an embodiment of the present disclosure.
FIG. 7 is yet another schematic flowchart of the method for controlling the electronic expansion valve of the air conditioner indoor unit according to an embodiment of the present disclosure.
FIG. 8 is yet another schematic flowchart of the method for controlling the electronic expansion valve of the air conditioner indoor unit according to an embodiment of the present disclosure.
FIG. 9 is a module structure diagram of an air conditioner according to an embodiment of the present disclosure.

The realization of the objective, functional characteristics, and advantages of the present disclosure are further described with reference to the accompanying drawings.

### DETAILED DESCRIPTION OF THE EMBODIMENTS

It should be understood that the specific embodiments described herein are only used to explain the present disclosure, and are not intended to limit the present disclosure.

In order to better understand the above-mentioned technical solutions, exemplary embodiments of the present disclosure will be described more detail in the following with reference to the accompanying drawings. Exemplary embodiments of the present disclosure are shown in the accompanying drawings, however, it should be understood that the present disclosure may be embodied in various forms and should not be limited to embodiments described in the present disclosure. On the contrary, embodiments of the present disclosure are provided for understanding the present disclosure more thoroughly and fully conveying the scope claimed in the present disclosure to those skilled in the art.

It should be noted that, in claims, any reference signs provided between parentheses shall not limit claims. The descriptions of "including" do not exclude the presence of elements or steps not listed in claims. The numeral of "a" or "an" preceding an element does not exclude the presence of a plurality of such elements. The hardware including various elements and the computer properly programmed can be used to realize the present disclosure. In a claim listing several apparatuses, several of these apparatuses can be embodied by a same hardware. Besides, the descriptions associated with, e.g., "first", "second" and "third" do not imply any order, and these words may be construed as designations.

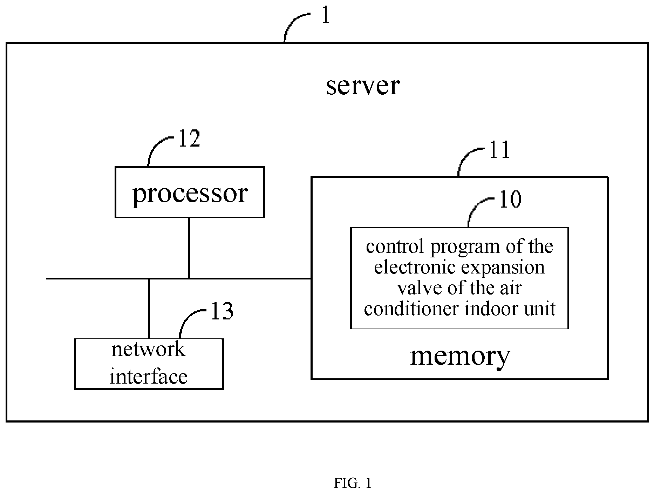

As shown in FIG. 1, FIG. 1 is a schematic structure diagram of a server 1 (also known as a device for controlling an electronic expansion valve of an air conditioner indoor unit) in a hardware operating environment according the technical solution of the embodiment in the present disclosure.

The server in an embodiment of the present disclosure can be a device with display functions, such as an "internet of things device", a smart air conditioner with networking function, a smart light, a smart power supply, an augmented reality (AR) or a virtual reality (VR) device with networking function, a smart speaker, an autonomous vehicle, a personal computer (PC), a smartphone, a tablet computer, an e-book reader, a portable computer, and the like.

As shown in FIG. 1, the server 1 includes a memory 11, a processor 12 and a network interface 13.

The memory 11 includes at least one type of readable storage medium, and the readable storage medium includes a flash memory, a hard disk, a multimedia card, a card-type memory (such as a secure digital memory or a memory data register, and the like), a magnetic memory, a magnetic disk, an optical disk, and the like. In some embodiments, the memory 11 may be an internal storage unit of the server 1, such as a hard disk of the server 1. In other embodiments, the memory 11 may be an external storage device of the server 1, such as a plug-in hard disk on the server 1, a smart media card (SMC), a secure digital (SD) card, a flash card, and the like.

Further, the memory 11 may include an internal storage unit of the server 1, and may also include an external storage device. The memory 11 can not only store application software installing in the server 1 and various data, such as the code in the control program 10 of the electronic expansion valve of the air conditioner indoor unit, but also can temporarily store data that has been output or will be output.

In some embodiments, the processor 12 may be a central processing unit (CPU), a controller, a microcontroller, a microprocessor or other data processing chips, for operating program codes stored in the memory 11 or for processing data. For example, the processor 12 is configured to execute the control program 10 of the electronic expansion valve of the air conditioner indoor unit, and the like.

The network interface 13 may include standard wired interfaces and wireless interfaces (such as wireless fidelity interfaces), which are generally used to establish communication connections between the server 1 and other electronic devices.

The network may be an internet, a cloud network, a wireless fidelity (Wi-Fi) network, a personal area network (PAN), a local area network (LAN) and/or a metropolitan area network (MAN). Various devices in a network environment can be connected to the communication network according to various wired and wireless communication protocols. Examples of such wired and wireless communication protocols may include, but not limited to, at least one of the following: transmission control protocol (TCP) and internet protocol (IP), user datagram protocol (UDP), hypertext transfer protocol (HTTP), file transfer protocol (FTP), ZigBee, EDGE, IEEE 802.11, light fidelity (Li-Fi), 802.16, IEEE 802.11s, IEEE 802.11g, multi-hop communication, access point (AP), device-to-device communication, cellular communication protocol and/or Bluetooth communication protocol or a combination thereof.

The server may further include a user interface. The user interface may include a display and an input unit such as a keyboard. The user interfaces may also include standard wired interfaces and wireless interfaces. In some embodiments, the display may be a light-emitting diode (LED) display, a liquid crystal display (LCD), a touch LCD, a touch organic light-emitting diode (OLED), and the like. The display is also be known as a display screen or a display unit, and is used for displaying information processed in the server 1 and displaying a visualized user interface.

FIG. 1 only shows a server 1 with components 11-13 controlled by an electronic expansion valve control 10 of an air conditioner indoor unit. Those skilled in the art can understand that, the server 1 does not limit to the structure shown in FIG. 1 and may include fewer or more components than FIG. 1, or different components, or combinations of certain components.

In this embodiment, the processor 12 may call a control program of the electronic expansion valve of the air conditioner indoor unit stored in the memory 11, and perform the following steps:
after an air conditioner is turned on, monitoring an indoor refrigerant change in real time;
determining whether an air conditioner outdoor unit enters an oil return state according to the indoor refrigerant change; and
when determining that the air conditioner outdoor unit enters the oil return state, adjusting the electronic expansion valve of the air conditioner indoor unit to adapt to the oil return state of the air conditioner outdoor unit.

In an embodiment, the processor 12 may call the control program of the electronic expansion valve of the air conditioner indoor unit stored in the memory 11, and perform the following steps:
monitoring a first change in temperature of an indoor heat exchanger and a second change in temperature of a low-pressure pipe connecting the indoor heat exchanger with a compressor in real time, to determine the indoor refrigerant change; and
the step of determining whether the air conditioner outdoor unit enters the oil return state according to the indoor refrigerant change includes determining whether any one of the first change and the second change meets a preset condition of the air conditioner outdoor unit entering the oil return state.

In an embodiment, the processor 12 may call the control program of the electronic expansion valve of the air conditioner indoor unit stored in the memory 11, and perform the following steps:
the step of determining whether the first change meets the preset condition of the air conditioner outdoor unit entering the oil return state includes:
in a cooling mode, acquiring a first temperature of the indoor heat exchanger every first preset time; and
between any two adjacent first temperatures, when a decrease value of a latter first temperature compared to a previous first temperature is greater than a first preset threshold, determining that the air conditioner indoor unit enters an oil return state;
   and/or,
in a heating mode, acquiring a second temperature of the indoor heat exchanger every second preset time; and
between any two adjacent second temperatures, when an increase value of a latter second temperature compared to a previous second temperature is greater than a second preset threshold, determining that the air conditioner indoor unit enters the oil return state.

In an embodiment, the processor 12 may call the control program of the electronic expansion valve of the air conditioner indoor unit stored in the memory 11, and perform the following steps:
the step of determining whether the second change meets the preset condition of the air conditioner outdoor unit entering the oil return state includes:
in the cooling mode, acquiring a third temperature of the low-pressure pipe every third preset time; and
when an air-out speed of the air conditioning indoor unit remains unchanged, and between any two adjacent third temperatures, a decrease value of a latter third temperature compared to a previous third temperature is greater than a third preset threshold, determining that the air conditioner indoor unit enters the oil return state;
   and/or,
in the heating mode, acquiring a fourth temperature of the low-pressure pipe every fourth preset time; and
when the air-out speed of the air conditioning indoor unit remains unchanged, and between any two adjacent fourth temperatures, an increase value of a latter fourth temperature compared to a previous fourth temperature is greater than a fourth preset threshold, determining that the air conditioner indoor unit enters the oil return state.

In an embodiment, the processor 12 may call the control program of the electronic expansion valve of the air conditioner indoor unit stored in the memory 11, and perform the following steps:
the step of when determining that the air conditioner outdoor unit enters the oil return state, adjusting the electronic expansion valve of the air conditioner indoor unit to adapt to the oil return state of the air conditioner outdoor unit includes:
when determining that the air conditioner outdoor unit enters the oil return state in the cooling mode, adjusting an opening degree of the electronic expansion valve of the air conditioner indoor unit according to a first preset parameter; and
when determining that the air conditioner outdoor unit enters the oil return state in the heating mode, adjusting the opening degree of the electronic expansion valve of the air conditioner indoor unit according to a second preset parameter.

In an embodiment, the processor 12 may call the control program of the electronic expansion valve of the air conditioner indoor unit stored in the memory 11, and perform the following steps:
the method for controlling the electronic expansion valve of the air conditioner indoor unit further includes following steps:
after determining that the air conditioner outdoor unit enters the oil return state, determining whether the air conditioner outdoor unit exits the oil return state according to the indoor refrigerant change; and
when determining that the air conditioner outdoor unit exits the oil return state, automatically controlling, by an automatic control program of the electronic expansion valve of the air conditioner indoor unit, the electronic expansion valve of the air conditioner indoor unit.

In an embodiment, the processor 12 may call the control program of the electronic expansion valve of the air conditioner indoor unit stored in the memory 11, and perform the following steps:
the step of determining whether the air conditioner outdoor unit exits the oil return state according to the indoor refrigerant change includes determining whether any one of the first change in temperature of the indoor heat exchanger and the second change in temperature of the low-pressure pipe connecting the indoor heat exchanger with the compressor meets a preset condition of the air conditioner outdoor unit exiting the oil return state.

In an embodiment, the processor 12 may call the control program of the electronic expansion valve of the air conditioner indoor unit stored in the memory 11, and perform the following steps:
the step of determining whether the first change in temperature of the indoor heat exchanger meets the preset condition of the air conditioner outdoor unit exiting the oil return state includes:
in the cooling mode, acquiring a fifth temperature of the indoor heat exchanger every fifth preset time; and
between any two adjacent fifth temperatures, when an increase value of a latter fifth temperature compared to a previous fifth temperature is greater than a fifth preset threshold, determining that the air conditioner indoor unit exits the oil return state;

In an embodiment, the processor 12 may call the control program of the electronic expansion valve of the air conditioner indoor unit stored in the memory 11, and perform the following steps:
the step of determining whether the second change in temperature of the low-pressure pipe connecting the indoor heat exchanger with the compressor meets the preset condition of the air conditioner outdoor unit exiting the oil return state includes:
in the heating mode, acquiring a sixth temperature of the low-pressure pipe every sixth preset time; and
between any two adjacent sixth temperatures, when a decrease value of a latter sixth temperature compared to a previous sixth temperature is greater than a sixth preset threshold, determining that the air conditioner indoor unit exits the oil return state.

In an embodiment, the processor 12 may call the control program of the electronic expansion valve of the air conditioner indoor unit stored in the memory 11, and perform the following steps:
the method for controlling the electronic expansion valve of the air conditioner indoor unit further includes following steps:
after determining that the air conditioner outdoor unit enters the oil return state, counting an operating time of the air conditioner after the air conditioner outdoor unit enters the oil return state, and determining whether the air conditioner outdoor unit exits the oil return state according to the operating time.

In an embodiment, the processor 12 may call the control program of the electronic expansion valve of the air conditioner indoor unit stored in the memory 11, and perform the following steps.

In an embodiment, the processor 12 may call the control program of the electronic expansion valve of the air conditioner indoor unit stored in the memory 11, and perform the following steps:
the step of controlling, by the automatic control program of the electronic expansion valve of the air conditioner indoor unit, the electronic expansion valve of the air conditioner indoor unit includes:
when determining that the air conditioner outdoor unit exits the oil return state according to the indoor refrigerant change, adjusting a step of the electronic expansion valve of the air conditioner indoor unit to a step before the air conditioner outdoor unit enters the oil return state, then automatically controlling, by the automatic control program, the electronic expansion valve of the air conditioner indoor unit.

In an embodiment, the processor 12 may call the control program of the electronic expansion valve of the air conditioner indoor unit stored in the memory 11, and perform the following steps:
the method is applied to the air conditioner in which the air conditioner indoor unit and the air conditioner outdoor unit operate independently of each other.

According to the hardware framework of the device for controlling the electronic expansion valve of the air conditioner indoor unit as mentioned above, embodiments of the method for controlling the electronic expansion valve of the air conditioner indoor unit in the present disclosure are provided. The present disclosure provides the method for controlling the electronic expansion valve of the air conditioner indoor unit, aiming to solve the problem that when the air conditioner outdoor unit enters an oil return state, the compressor is prone to wear and the operating reliability of the air conditioner is reduced.

In the present disclosure, the method for controlling the electronic expansion valve of the air conditioner indoor unit is applied to the air conditioner in which the air conditioner indoor unit and the air conditioner outdoor unit operate independently of each other (that is, the air conditioner indoor unit and the air conditioner outdoor unit do not communicate with each other). The air conditioner also includes an external signal box, and the external signal box is electrically connected to each of the air conditioner indoor unit and the air conditioner outdoor unit. The external signal box is configured to receive instructions input by users, and send control signals to the air conditioner indoor unit and the air conditioner outdoor unit in one direction, to control cooperation between the air conditioner indoor unit and the air conditioner outdoor unit, thereby adjusting the indoor ambient temperature.

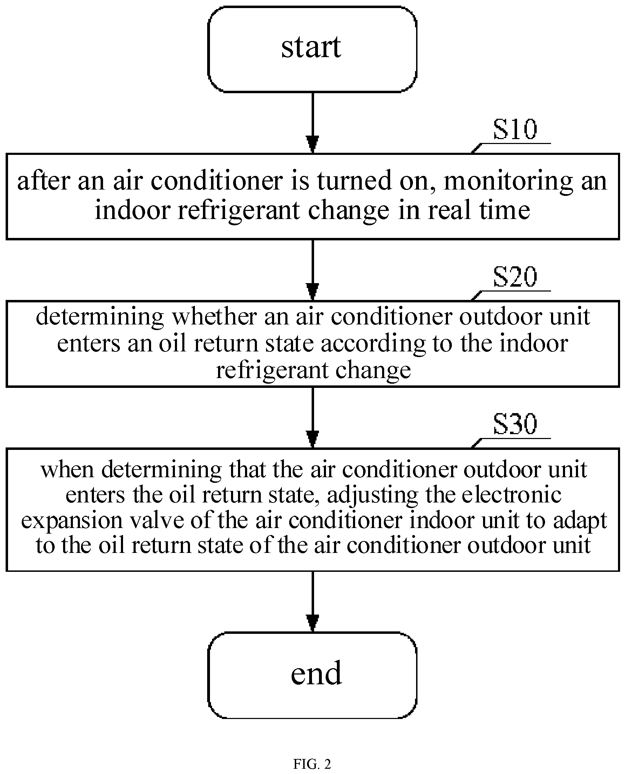

As shown in FIG. 2, FIG. 2 shows an embodiment of the method for controlling the electronic expansion valve of the air conditioner indoor unit in the present disclosure, and the method includes the following steps.

S10, after an air conditioner is turned on, monitoring an indoor refrigerant change in real time.

The indoor refrigerant refers to the refrigerant circulating in the indoor heat exchanger and the indoor refrigerant pipeline. The refrigerant change refers to that, after the air conditioner is turned on, the refrigerant state in the air conditioner (including indoor refrigerant and outdoor refrigerant) changes with the operation of the air conditioner. The refrigerant state change includes, but not limited to, a change in the refrigerant temperature, a change in the refrigerant pressure, and a change in the refrigerant flow, and the change includes, but not limited to, the change frequency and the change amplitude. Therefore, the step of monitoring the indoor refrigerant change in real time refers to that after the air conditioner is turned on, monitoring a refrigerant state change in the indoor heat exchanger and the indoor refrigerant pipeline in real time.

520, determining whether an air conditioner outdoor unit enters an oil return state according to the indoor refrigerant change.

Since the air conditioner indoor unit and the air conditioner outdoor unit do not communicate with each other, and cannot communicate with each other through the external signal box, the air conditioner indoor unit cannot directly acquire the information of whether the air conditioner outdoor unit enters the oil return state. However, when the air conditioner outdoor unit enters the oil return state, the operating frequency of the compressor will change suddenly. The operating frequency change of the compressor will cause the refrigerant in the air conditioner to change accordingly, and the indoor refrigerant will also change accordingly. Therefore, during the operation of the air conditioner, whether the sudden change in the operating frequency of the compressor can be determined according to the indoor refrigerant change, then whether the air conditioner outdoor unit enters the oil return state can be determined. In this way, under the condition that the air conditioner indoor unit and the air conditioner outdoor unit do not communicate with each other, the air conditioner indoor unit can detect whether the air conditioner outdoor unit enters the oil return state. It should be noted that the reason why the air conditioner indoor unit and the air conditioner outdoor unit are designed not to communicate with each other may be that the cost or difficulty of establishing communication between the air conditioner indoor unit and the air conditioner outdoor unit is too high and not suitable for practical use. That is, since the technical solutions of the present disclosure is realized under the condition that the air conditioner indoor unit and the air conditioner outdoor unit do not communicate with each other, the present disclosure also has the advantages of low cost and wide universality.

S30, when determining that the air conditioner outdoor unit enters the oil return state, adjusting the electronic expansion valve of the air conditioner indoor unit to adapt to the oil return state of the air conditioner outdoor unit.

When determining whether the air conditioner outdoor unit enters an oil return state according to the indoor refrigerant change, the electronic expansion valve of the air conditioner indoor unit needs to be adjusted. The electronic expansion valve is installed on the indoor refrigerant pipeline, and the refrigerant flow and pressure in the indoor refrigerant pipeline can be adjusted by adjusting the opening degree of the electronic expansion valve, to adapt to the oil return state of the air conditioner outdoor unit and realize the normal oil return of the compressor.

It should be noted that when the air conditioner indoor unit and the air conditioner outdoor unit do not communicate with each other, the air conditioner indoor unit cannot directly acquire the information of whether the air conditioner outdoor unit enters the oil return state. In this case, if the air conditioner outdoor unit enters the oil return state, the air conditioner indoor unit will still operate in a normal mode, and then the electronic expansion valve of the air conditioner indoor unit will not be adjusted accordingly, which not only leads to poor oil return for a long time, but also causes the compressor to wear, or makes the temperature and pressure of the whole machine too high to cause shutdown and reduce the reliability of the device.

In view of the above problems, the method for controlling the electronic expansion valve of the air conditioner indoor unit in the present disclosure includes: after the air conditioner is turned on, monitoring an indoor refrigerant change in real time to determine whether an air conditioner outdoor unit enters an oil return state, and after determining that the air conditioner outdoor unit enters the oil return state, adjusting the electronic expansion valve of the air conditioner indoor unit to adapt to the oil return state of the air conditioner outdoor unit. In this way, when the air conditioner outdoor unit enters the oil return state, the electronic expansion valve of the air conditioner indoor unit can be adjusted in time to avoid poor oil return of the air conditioner. Compared with the air conditioner in which the air conditioner indoor unit cannot adjust the electronic expansion valve in time when the air conditioner outdoor unit enters the oil return state, the method for controlling the electronic expansion valve of the air conditioner indoor unit in the present disclosure not only can prolong the service life of the compressor, but also can improve the operating reliability of the air conditioner.

It should be noted that, in the technical solutions of the present disclosure, the air conditioner indoor unit does not need to communicate with the air conditioner outdoor unit, thus, cooperation between different types of air conditioner indoor units and air conditioner outdoor units can be realized by the technical solutions of the present disclosure.

By monitoring a first change in temperature of an indoor heat exchanger and a second change in temperature of a low-pressure pipe connecting the indoor heat exchanger with a compressor in real time, the indoor refrigerant change can be determined.

The refrigerant temperature change is one of the refrigerant changes caused by the operating frequency change of the compressor. Compared with the refrigerant changes such as the flow change and the pressure change, the temperature change is relatively easy to detect. Not only is the detection cost low, but also the data is easy to process such that the refrigerant change is determined visually. In this embodiment, the refrigerant temperature change can be determined by detecting a first change in temperature of an indoor heat exchanger and a second change in temperature of a low-pressure pipe connecting the indoor heat exchanger with a compressor. A temperature sensor can be provided on the coil of the indoor heat exchanger to detect the temperature change of the indoor heat exchanger. The low-pressure pipe connecting the indoor heat exchanger with a compressor refers to a refrigerant pipe connecting the indoor heat exchanger with a compressor without an electronic expansion valve. Acquiring the second change in temperature of the low-pressure pipe to determine the temperature change of the indoor refrigerant is on the basis that, the state of the refrigerant in the low-pressure pipe is not affected by the electronic expansion valve and can more accurately reflect the operating frequency change of the compressor. If the temperature of the refrigerant pipe connecting the compressor with the air conditioner indoor unit and equipped with an electronic expansion valve is detected, the electronic expansion valve will change the refrigerant state (temperature, pressure, and the like) in the refrigerant pipe, thereby affecting the determination of whether the air conditioner outdoor unit enters the oil return state. It should be noted that, to detect the temperature change of the indoor refrigerant, an end of the low-pressure pipe on the indoor side can be provided with a temperature sensor to detect a temperature change of the low-pressure pipe. Of course, the design of the present disclosure is not limited thereto, and in other embodiments, the refrigerant change can be determined according to other changes.

Correspondingly, based on the above embodiments, the step of determining whether the air conditioner outdoor unit enters the oil return state according to the indoor refrigerant change includes determining whether any one of the first change and the second change meets a preset condition of the air conditioner outdoor unit entering the oil return state.

It can be seen from the above embodiments that the temperature change of the indoor refrigerant can be reflected by any one of the first change of the indoor heat exchanger and the second change in temperature of the low-pressure pipe. Determining whether any one of the first change and the second change meets the preset condition of the air conditioner outdoor unit entering the oil return state, whether the air conditioner outdoor unit enters the oil return state can be determined. In this way, the error-tolerant rate of determining whether the air conditioner outdoor unit enters the oil return state can be improved, and whether the air conditioner outdoor unit enters the oil return state can be determined timely to adjust the electronic expansion valve of the air conditioner indoor unit in time, thereby improving the operation reliability of the air conditioner. The preset condition of the air conditioner outdoor unit entering the oil return state is configured to determine whether the air conditioner outdoor unit enters the oil return state, and the preset condition can be adjusted adaptively according to the specific product model of the air conditioner, the actual operating environment, and the like.

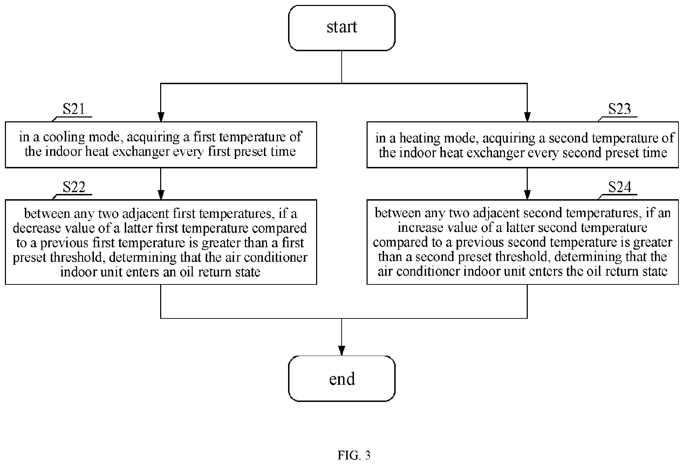

As shown in FIG. 3, in an embodiment, the step of determining whether the first change meets the preset condition of the air conditioner outdoor unit entering the oil return state includes the following steps.

S21, in a cooling mode, acquiring a first temperature of the indoor heat exchanger every first preset time.

When the air conditioner is operating in the cooling mode, the coil temperature in the indoor heat exchanger is detected every first preset time as the first temperature. The first preset time may be 1 second, 2 seconds, 3 seconds, 4 seconds, 5 seconds, 6 seconds, 7 seconds, 8 seconds, 9 seconds, 10 seconds and the like.

S22, between any two adjacent first temperatures, if a decrease value of a latter first temperature compared to a previous first temperature is greater than a first preset threshold, determining that the air conditioner indoor unit enters an oil return state.

After acquiring at least two first temperatures, calculating the difference value between two adjacent first temperatures. In the cooling mode, when the air conditioner outdoor unit enters the oil return state, the sudden change in the operating frequency of the compressor (suddenly increase) will cause the refrigerant temperature to drop rapidly. Therefore, whether the air conditioner outdoor unit enters the oil return state can be determined according to the decrease range in temperature of the indoor refrigerant within the first preset time. That is, the difference value between the two first temperatures should be a decrease value of a latter first temperature compared to a previous first temperature between the two adjacent first temperatures. If the decrease value is greater than the first preset threshold, it can be determined that the air conditioner outdoor unit enters the oil return state. It should be noted that, the first preset threshold can be adaptively adjusted according to the specific product model of the air conditioner, the actual operating environment, and the like. The first preset threshold may be 1°C, 2°C, 3°C, 4°C, 5°C, 6°C and the like.

As shown in FIG. 3, in an embodiment, the step of determining whether the first change meets the preset condition of the air conditioner outdoor unit entering the oil return state further includes the following steps.

S23, in a heating mode, acquiring a second temperature of the indoor heat exchanger every second preset time.

When the air conditioner is operating in the heating mode, the coil temperature in the indoor heat exchanger is detected every second preset time as the second temperature. The second preset time may be 1 second, 2 seconds, 3 seconds, 4 seconds, 5 seconds, 6 seconds, 7 seconds, 8 seconds, 9 seconds, 10 seconds and the like.

S24, between any two adjacent second temperatures, if an increase value of a latter second temperature compared to a previous second temperature is greater than a second preset threshold, determining that the air conditioner indoor unit enters the oil return state.

After acquiring at least two second temperatures, calculating the difference value between two adjacent second temperatures. In the heating mode, when the air conditioner outdoor unit enters the oil return state, the sudden change in the operating frequency of the compressor (suddenly increase) will cause the refrigerant temperature to rise rapidly. Therefore, whether the air conditioner outdoor unit enters the oil return state can be determined according to the increase range in temperature of the indoor refrigerant within the second preset time. That is, the difference value between the two second temperatures should be an increase value of a latter second temperature compared to a previous second temperature between the two adjacent second temperatures. If the increase value is greater than the second preset threshold, it can be determined that the air conditioner outdoor unit enters the oil return state. It should be noted that, the second preset threshold can be adaptively adjusted according to the specific product model of the air conditioner, the actual operating environment, and the like. The second preset threshold may be 2°C, 3°C, 4°C, 5°C, 6°C, 7°C, 8°C, 9°C and the like.

It should be noted that, to simplify the acquisition of temperature data, in some embodiments, the first preset time may be equal to the second preset time.

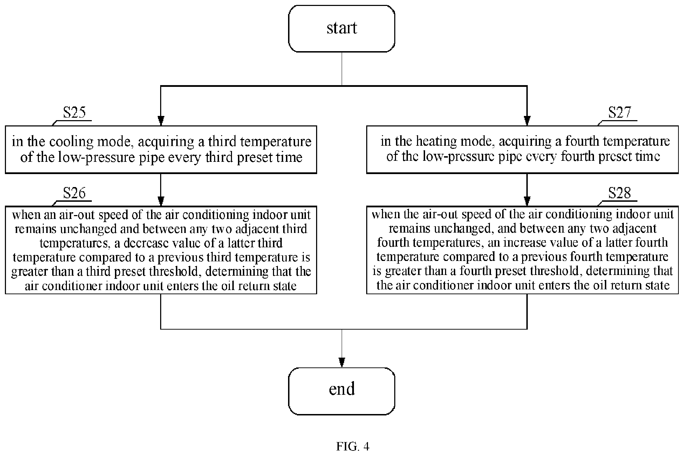

As shown in FIG. 4, in an embodiment, the step of determining whether the second change meets the preset condition of the air conditioner outdoor unit entering the oil return state includes the following steps.

S25, in the cooling mode, acquiring a third temperature of the low-pressure pipe every third preset time.

When the air conditioner operates in the cooling mode, the temperature of the low-pressure pipe is detected every third preset time as the third temperature. The third preset time may be 1 second, 2 seconds, 3 seconds, 4 seconds, 5 seconds, 6 seconds, 7 seconds, 8 seconds, 9 seconds, 10 seconds and the like.

S26, when an air-out speed of the air conditioning indoor unit remains unchanged and between any two adjacent third temperatures, a decrease value of a latter third temperature compared to a previous third temperature is greater than a third preset threshold, determining that the air conditioner indoor unit enters the oil return state.

The change of the air-out speed of the air conditioner indoor unit will affect the refrigerant temperature in the low-pressure pipe, thereby affecting the determination of the refrigerant temperature change and easily leading to errors. Therefore, determining the temperature change of the indoor refrigerant according to the temperature change of the low-pressure pipe should be on the basis that the air-out speed of the air conditioning indoor unit remains unchanged. The air-out speed of the air conditioning indoor unit remaining unchanged means that the air-out speed level of the air conditioner indoor unit does not change during the process of acquiring any two adjacent third temperatures. After acquiring at least two third temperatures, calculating the difference value between two adjacent third temperatures. In the cooling mode, when the air conditioner outdoor unit enters the oil return state, the refrigerant temperature will drop rapidly. The difference value between the two third temperatures should be a decrease value of a latter third temperature compared to a previous third temperature between the two adjacent third temperatures. If the decrease value is greater than the third preset threshold, it can be determined that the air conditioner outdoor unit enters the oil return state. It should be noted that, the third preset threshold can be adaptively adjusted according to the specific product model of the air conditioner, the actual operating environment, and the like. The third preset threshold may be 1°C, 2°C, 3°C, 4°C, 5°C, 6°C and the like.

As shown in FIG. 4, in an embodiment, the step of determining whether the second change meets the preset condition of the air conditioner outdoor unit entering the oil return state includes the following steps.

S27, in the heating mode, acquiring a fourth temperature of the low-pressure pipe every fourth preset time.

When the air conditioner operates in the heating mode, the temperature of the low-pressure pipe is detected every fourth preset time as the fourth temperature. The fourth preset time may be 1 second, 2 seconds, 3 seconds, 4 seconds, 5 seconds, 6 seconds, 7 seconds, 8 seconds, 9 seconds, 10 seconds and the like.

S28, when the air-out speed of the air conditioning indoor unit remains unchanged, and between any two adjacent fourth temperatures, an increase value of a latter fourth temperature compared to a previous fourth temperature is greater than a fourth preset threshold, determining that the air conditioner indoor unit enters the oil return state.

The change of the air-out speed of the air conditioner indoor unit will affect the refrigerant temperature in the low-pressure pipe, thereby affecting the determination of the refrigerant temperature change and easily leading to errors. Therefore, determining the temperature change of the indoor refrigerant according to the temperature change of the low-pressure pipe should be on the basis that the air-out speed of the air conditioning indoor unit remains unchanged. The air-out speed of the air conditioning indoor unit remaining unchanged means that the air-out speed level of the air conditioner indoor unit does not change during the process of acquiring any two adjacent fourth temperatures. After acquiring at least two fourth temperatures, calculating the difference value between two adjacent fourth temperatures. In the heating mode, when the air conditioner outdoor unit enters the oil return state, the refrigerant temperature will rise rapidly. The difference value between the two fourth temperatures should be an increase value of a latter fourth temperature compared to a previous fourth temperature between the two adjacent fourth temperatures. If the increase value is greater than the fourth preset threshold, it can be determined that the air conditioner outdoor unit enters the oil return state. It should be noted that, the fourth preset threshold can be adaptively adjusted according to the specific product model of the air conditioner, the actual operating environment, and the like. The fourth preset threshold may be 1 °C, 2°C, 3°C, 4°C, 5°C, 6°C and the like.

It should be noted that, to simplify the acquisition of temperature data, in some embodiments, the third preset time may be equal to the fourth preset time.

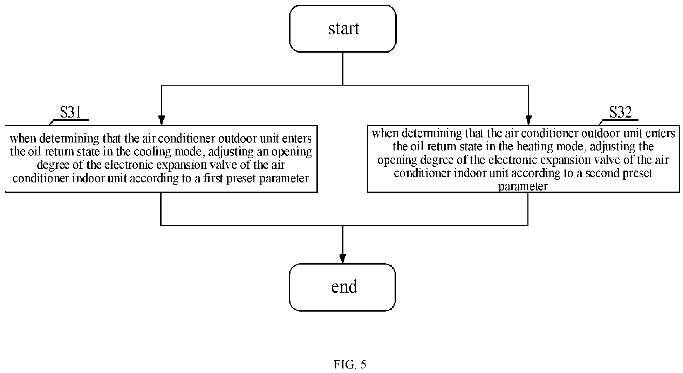

As shown in FIG. 5, in an embodiment, the step of determining when the air conditioner outdoor unit enters the oil return state, adjusting the electronic expansion valve of the air conditioner indoor unit to adapt to the oil return state of the air conditioner outdoor unit includes the following steps.

S31, when determining that the air conditioner outdoor unit enters the oil return state in the cooling mode, adjusting an opening degree of the electronic expansion valve of the air conditioner indoor unit according to a first preset parameter.

The first preset parameter is an adjustment parameter of the electronic expansion valve of the air conditioner indoor unit when the air conditioner outdoor unit enters an oil return state and the air conditioner is in the cooling mode. The first preset parameter may be the oil return step Lcl, and the oil return step Lc1 may be step 200, step 225, step 250, step 275, step 300, step 325, step 350, step 375, step 400, step 425, step 450, step 475, step 500, and the like. Taking the oil return step Lc1 of step 350 as an example, if it is determined that the air conditioner outdoor unit enters the oil return state in the cooling mode, opening the electronic expansion valve of the air conditioner indoor unit until the oil return step is step 350.

S32, when determining that the air conditioner outdoor unit enters the oil return state in the heating mode, adjusting the opening degree of the electronic expansion valve of the air conditioner indoor unit according to a second preset parameter.

The second preset parameter is an adjustment parameter of the electronic expansion valve of the air conditioner indoor unit when the air conditioner outdoor unit enters an oil return state and the air conditioner is in the heating mode. The second preset parameter may be the oil return step Lc2, and the oil return step Lc2 may be step 300, step 320, step 340, step 360, step 380, step 400, step 420, step 440, step 460, step 480, step 500, step 520, step 540, step 560, step 580, step 600, and the like. Taking the oil return step Lc2 of step 480 as an example, if it is determined that the air conditioner outdoor unit enters the oil return state in the heating mode, opening the electronic expansion valve of the air conditioner indoor unit until the oil return step is step 480.

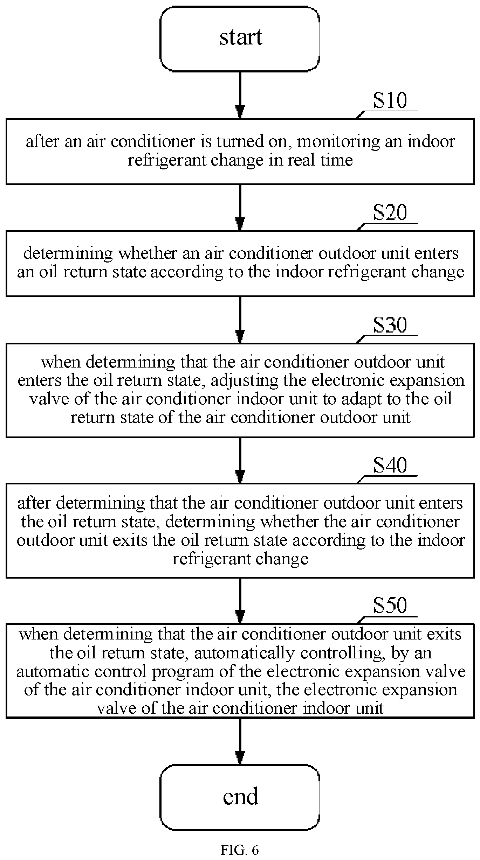

As shown in FIG. 6, in an embodiment, the method for controlling the electronic expansion valve of the air conditioner indoor unit further includes following steps.

540, after determining that the air conditioner outdoor unit enters the oil return state, determining whether the air conditioner outdoor unit exits the oil return state according to the indoor refrigerant change.

When the air conditioner outdoor unit exits the oil return state, the operating frequency of the compressor will return to the frequency before the oil return state. That is, when the air conditioner outdoor unit exits the oil return state, the operating frequency of the compressor will also change suddenly, causing the refrigerant in the air conditioner to change. Correspondingly, after determining that the air conditioner outdoor unit enters the oil return state, whether the air conditioner outdoor unit exits the oil return state can be determined according to the indoor refrigerant change.

S50, when determining that the air conditioner outdoor unit exits the oil return state, automatically controlling, by an automatic control program of the electronic expansion valve of the air conditioner indoor unit, the electronic expansion valve of the air conditioner indoor unit.

The automatic control program of the electronic expansion valve of the air conditioner indoor unit refers to the automatic control program of the electronic expansion valve preset by the air conditioner indoor unit. Different modes of air conditioner indoor units may preset different automatic control programs, and the automatic control program is mainly configured to control the electronic expansion valve to adapt to the set temperature currently input by the user. After the air conditioner outdoor unit exits the oil return state, the air conditioner indoor unit needs to release the oil return control accordingly, to make the air conditioner return to the operating state before the oil return state. On the basis that the electronic expansion valve of the air conditioner indoor unit is automatically controlled by the automatic control program, the air conditioner can return to the operating state before the oil return state. Therefore, when determining that the air conditioner outdoor unit exits the oil return state, it is necessary to automatically control the electronic expansion valve of the air conditioner indoor unit by an automatic control program of the electronic expansion valve of the air conditioner indoor unit.

It can be understood that after the air conditioner outdoor unit enters the oil return state, whether the air conditioner outdoor unit exits the oil return state can be determined by continuing to monitor the indoor refrigerant change. In this way, the air conditioner indoor unit can determine whether the air conditioner outdoor unit exits the oil return state without communicating with the air conditioner outdoor unit. After determining that the air conditioner outdoor unit exits the oil return state, the electronic expansion valve is automatically controlled by the automatic control program, which helps the air conditioner to return to the operation state before the oil return, thereby improving comfort and improving user experience.

The step of determining whether the air conditioner outdoor unit exits the oil return state according to the indoor refrigerant change includes determining whether any one of the first change in temperature of the indoor heat exchanger and the second change in temperature of the low-pressure pipe connecting the indoor heat exchanger with the compressor meets a preset condition of the air conditioner outdoor unit exiting the oil return state.

The temperature change of the indoor refrigerant can be reflected according to any one of the first change in temperature of the indoor heat exchanger and the second change in temperature of the low-pressure pipe. It can be understood that, the temperature change of the indoor refrigerant can be used to determine whether the air conditioner outdoor unit enters the oil return state. Thus, whether the air conditioner outdoor unit exits the oil return state can be also determined according to the temperature change of the indoor refrigerant, and it is not necessary to acquire other types of data again to determine whether the air conditioner outdoor unit exits the oil return state, which can simplify the conditions for determining whether the air conditioner outdoor unit enters/exits the oil return state, thereby reducing the determination difficulty and the cost required for implementing the method. By determining whether any one of the first change and the second change meets the preset condition of the air conditioner outdoor unit exiting the oil return state, whether the air conditioner outdoor unit exits the oil return state can be determined. In this case, not only the error-tolerance rate of determining whether the air conditioner outdoor unit exits the oil return state can be improved, but also whether the air conditioner outdoor unit exits the oil return state can be determined in time to adjust the electronic expansion valve of the air conditioner indoor unit in time, then the air conditioner can return to the operation state before the oil return as soon as possible, thereby improving the comfort of the air conditioner. The preset condition of the air conditioner outdoor unit exiting the oil return state is used to determine whether the air conditioner outdoor unit exits the oil return state, and can be adjusted adaptively according to the specific product model of the air conditioner, the actual operating environment and the like.

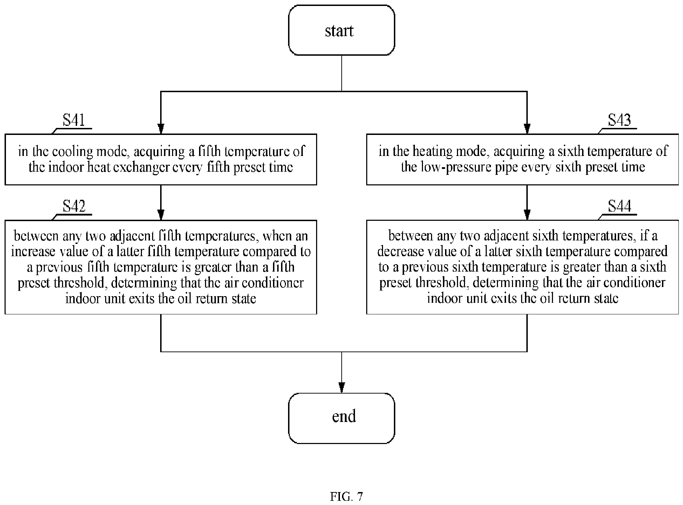

As shown in FIG. 7, in an embodiment, the step of determining whether the first change in temperature of the indoor heat exchanger meets the preset condition of the air conditioner outdoor unit exiting the oil return state includes:
S41, in the cooling mode, acquiring a fifth temperature of the indoor heat exchanger every fifth preset time.

When the air conditioner operates in the cooling mode, the coil temperature of the indoor heat exchanger is detected every fifth preset time as the fifth temperature. The fifth preset time may be 1 second, 2 seconds, 3 seconds, 4 seconds, 5 seconds, 6 seconds, 7 seconds, 8 seconds, 9 seconds, 10 seconds and the like.

S42, between any two adjacent fifth temperatures, when an increase value of a latter fifth temperature compared to a previous fifth temperature is greater than a fifth preset threshold, determining that the air conditioner indoor unit exits the oil return state.

After acquiring at least two fifth temperatures, calculating the difference value between two adjacent fifth temperatures. In the cooling mode, when the air conditioner outdoor unit enters the oil return state, the sudden change in the operating frequency of the compressor (suddenly increase) will cause the refrigerant temperature to drop rapidly. However, when the air conditioner outdoor unit exits the oil return state, the compressor returns the operating frequency before the oil return state, which will cause the refrigerant temperature to rise rapidly. Whether the air conditioner outdoor unit enters the oil return state can be determined according to the increase range in temperature of the indoor refrigerant within the fifth preset time. That is, the difference value between the two fifth temperatures should be an increase value of a latter fifth temperature compared to a previous fifth temperature between the two adjacent fifth temperatures. If the increase value is greater than the fifth preset threshold, it can be determined that the air conditioner outdoor unit enters the oil return state. It should be noted that, the fifth preset threshold can be adaptively adjusted according to the specific product model of the air conditioner, the actual operating environment, and the like. The fifth preset threshold may be 1 °C, 2°C, 3°C, 4°C, 5°C, 6°C and the like.

It should be noted that, due to the following reasons, the temperature change of the indoor heat exchanger is used to determine whether the air conditioner outdoor unit exits the oil return state. In the cooling mode, the refrigerant in the low-pressure pipe flows from the indoor heat exchanger to the compressor. That is, the temperature change of the indoor heat exchanger can reflect the operating frequency change of the compressor earlier. In this way, whether the air conditioner outdoor unit exits the oil return state can be determined earlier, and then the electronic expansion valve of the air conditioner indoor unit can be adjusted as soon as possible to make the air conditioner return to the operating state before the oil return state as soon as possible, which can improve comfort and the user experience. Of course, in other embodiments, the temperature change of the low-pressure pipe can also be used to determine whether the air conditioner outdoor unit exits the oil return state in the cooling mode.

It should be noted that, to simplify the acquisition of temperature data and reduce the determination difficulty, in some embodiments of the present disclosure, the fifth preset time is equal to the first preset time in the above-mentioned embodiments, then the fifth temperature can also be regarded as the first temperature. The difference is that, in the cooling mode, determining whether the air conditioner outdoor unit enters the oil return state is based on a decrease value of a latter first temperature compared to a previous first temperature between two adjacent first temperatures. However, determining whether the air conditioner outdoor unit exits the oil return state is based on an increase value of a latter fifth temperature compared to a previous fifth temperature between two adjacent fifth temperatures.

As shown in FIG. 7, in an embodiment, the step of determining whether the second change in temperature of the low-pressure pipe connecting the indoor heat exchanger with the compressor meets the preset condition of the air conditioner outdoor unit exiting the oil return state includes the following steps.

S43, in the heating mode, acquiring a sixth temperature of the low-pressure pipe every sixth preset time.

When the air conditioner operates in the heating mode, the temperature of the low-pressure pipe is detected every sixth preset time as the sixth temperature. The sixth preset time may be 1 second, 2 seconds, 3 seconds, 4 seconds, 5 seconds, 6 seconds, 7 seconds, 8 seconds, 9 seconds, 10 seconds and the like.

S44, between any two adjacent sixth temperatures, if a decrease value of a latter sixth temperature compared to a previous sixth temperature is greater than a sixth preset threshold, determining that the air conditioner indoor unit exits the oil return state.

After acquiring at least two sixth temperatures, calculating the difference value between two adjacent sixth temperatures. In the heating mode, when the air conditioner outdoor unit enters the oil return state, the refrigerant temperature will rise rapidly. However, when the air conditioner outdoor unit exits the oil return state, the compressor returns the operating frequency before the oil return state, which will cause the refrigerant temperature to decrease rapidly. The difference value between the two sixth temperatures is a decrease value of a latter sixth temperature compared to a previous sixth temperature between the two adjacent sixth temperatures. If the increase value is greater than the sixth preset threshold, it can be determined that the air conditioner outdoor unit enters the oil return state. It should be noted that, the sixth preset threshold can be adaptively adjusted according to the specific product model of the air conditioner, the actual operating environment, and the like. The sixth preset threshold may be 1°C, 2°C, 3°C, 4°C, 5°C, 6°C and the like.

It should be noted that, for the following reasons, the temperature change of the low-pressure pipe is used to determine whether the air conditioner outdoor unit exits the oil return state. In the heating mode, the refrigerant in the low-pressure pipe flows from the compressor to the indoor heat exchanger. That is, the temperature change of the low-pressure pipe can reflect the operating frequency change of the compressor earlier. In this way, whether the air conditioner outdoor unit exits the oil return state can be determined earlier, and then the electronic expansion valve of the air conditioner indoor unit can be adjusted as soon as possible to make the air conditioner return to the operating state before oil return state as soon as possible, which can improve comfort and the user experience. Of course, in other embodiments, the temperature change of the indoor heat exchanger can also be used to determine whether the air conditioner outdoor unit exits the oil return state in the heating mode.

It should be noted that, to simplify the acquisition of temperature data and reduce the determination difficulty, in some embodiments of the present disclosure, the sixth preset time is equal to the fourth preset time in the above-mentioned embodiments, then the sixth temperature can be regarded as the fourth temperature. The difference is that, in the heating mode, determining whether the air conditioner outdoor unit enters the oil return state is based on an increase value of a latter fourth temperature compared to a previous fourth temperature between two adjacent fourth temperatures. However, determining whether the air conditioner outdoor unit exits the oil return state is based on a decrease value of a latter sixth temperature compared to a previous sixth temperature between two adjacent sixth temperatures.

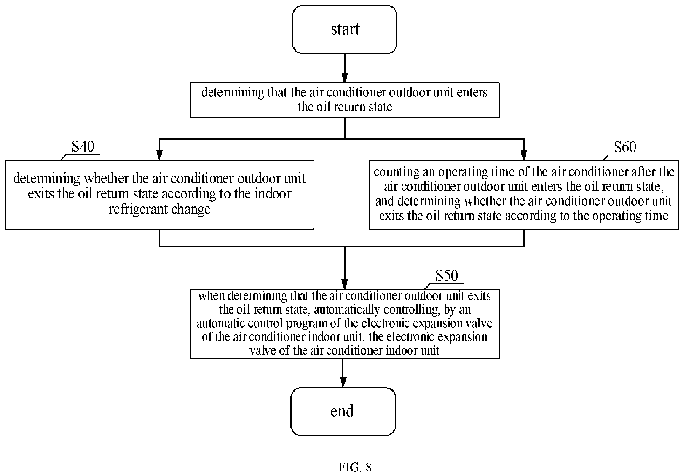

As shown in FIG. 8, in an embodiment, the method for controlling the electronic expansion valve of the air conditioner indoor unit further includes the following steps.

S60, after determining that the air conditioner outdoor unit enters the oil return state, counting an operating time of the air conditioner after the air conditioner outdoor unit enters the oil return state, and determining whether the air conditioner outdoor unit exits the oil return state according to the operating time.

The oil return time of the air conditioner is limited, and the operating time of the air conditioner after the air conditioner outdoor unit enters the oil return state can be counted, and according to the operating time, whether the air conditioner outdoor unit exits the oil return state can be determined. It can be understood that, this way of determining whether the air conditioner outdoor unit exits the oil return state is simple, and the determination accuracy is high.

It should be noted that, after the air conditioner outdoor unit enters the oil return state, as long as either the temperature change of the indoor refrigerant or the operating time of the air conditioner meets the determination condition, that the air conditioner outdoor unit exits the oil return state can be determined.

In an embodiment, the step of determining whether the air conditioner outdoor unit exits the oil return state according to the operating time includes if the operating time is greater than the preset threshold, it is determined that the air conditioner outdoor unit exits the oil return state.

The preset threshold can be adaptively adjusted according to the specific product model of the air conditioner, the actual operating environment, and the like. The preset threshold may be 5 minutes, 6 minutes, 7 minutes, 8 minutes, 9 minutes, 10 minutes, 11 minutes, 12 minutes and the like.

In an embodiment, the step of controlling, by the automatic control program of the electronic expansion valve of the air conditioner indoor unit, the electronic expansion valve of the air conditioner indoor unit includes the following steps.

If determining that the air conditioner outdoor unit exits the oil return state according to the indoor refrigerant change, adjusting a step of the electronic expansion valve of the air conditioner indoor unit to a step before the air conditioner outdoor unit enters the oil return state, then the electronic expansion valve of the air conditioner indoor unit is automatically controlled by the automatic control program.

Since the refrigerant change can be reflected by the operating frequency change of the compressor of the air conditioner indoor unit in time, whether the air conditioner outdoor unit exits the oil return state can be determined according to the indoor refrigerant change in the shortest time. Then, when determining that the air conditioner outdoor unit exits the oil return state according to the indoor refrigerant change, the step of adjusting a step of the electronic expansion valve of the air conditioner indoor unit to a step before the air conditioner outdoor unit enters the oil return state can make the air conditioner indoor unit synchronized with the air conditioner outdoor unit in the shortest time, which is beneficial for the air conditioner to return the operating state before the oil return state as soon as possible, thereby improving comfort and the user experience.

In an embodiment, the step of controlling, by the automatic control program of the electronic expansion valve of the air conditioner indoor unit, the electronic expansion valve of the air conditioner indoor unit includes the following steps.

If whether the air conditioner outdoor unit exits the oil return state is determined according to the operating time of the air conditioner after the air conditioner outdoor unit enters the oil return state, the electronic expansion valve of the air conditioner indoor unit is automatically controlled by the automatic control program.

When the operating time meets the determination condition (greater than the preset threshold), it can be determined that the air conditioner outdoor unit has exited the oil return state. Considering that the air conditioner outdoor unit may have exited the oil return state before the operating time meets the determination condition, and may have been operating in the non-oil return mode for a period of time, in this case, adjusting the step of the electronic expansion valve of the air conditioner indoor unit to the step before the air conditioner outdoor unit enters the oil return state will instead cause the air conditioner indoor unit to be out of sync with the air conditioner outdoor unit, thereby affecting the operating effect of the air conditioner. Therefore, when determining whether the air conditioner outdoor unit exits the oil return state according to the operating time, the electronic expansion valve of the air conditioner indoor unit is automatically controlled by the automatic control program.

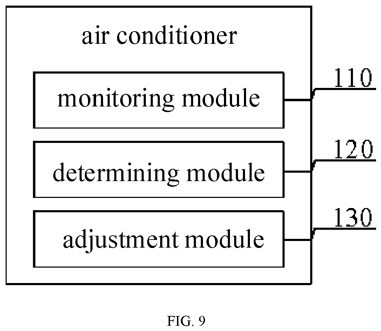

In addition, as shown in FIG. 9, an embodiment of the present disclosure further provides an air conditioner including:
a monitoring module 110, configured to monitor an indoor refrigerant change in real time after the air conditioner is turned on;
a determining module 120, configured to determine whether an air conditioner outdoor unit enters an oil return state according to the indoor refrigerant change; and
an adjustment module 130, configured to adjust an electronic expansion valve of an air conditioner indoor unit to adapt to the oil return state of the air conditioner outdoor unit after determining that the air conditioner outdoor unit enters the oil return state.

The steps implemented by each functional module of the air conditioner may be referred to each embodiment of the method for controlling the electronic expansion valve of the air conditioner indoor unit of the present disclosure, which will not be repeated here.

In addition, an embodiment of the present disclosure further provides a computer-readable storage medium. The computer-readable storage medium can be any one or any combination of a hard disk, a multimedia card, a SD card, a flash memory card, an SMC, a read-only memory (ROM), an erasable programmable read-only memory (EPROM), a portable compact disk read-only memory (CD-ROM), a universal serial bus (USB) memory, and the like. The computer-readable storage medium includes a control program 10 of the electronic expansion valve of the air conditioner indoor unit, and the specific embodiments of the computer-readable storage medium in the present disclosure is substantially the same as the embodiments of the method for controlling the electronic expansion valve of the air conditioner indoor unit as mentioned above, which will not be repeated here.

Those skilled in the art should understand that the embodiments of the present disclosure may be provided for methods, systems, or computer program products. Accordingly, the present disclosure may adopt the form of entirely hardware embodiments, entirely software embodiments, or embodiments combining software and hardware. Furthermore, the present disclosure may realize a computer program product executed on one or more computer-usable storage medium (including, but not limited to, a disk storage, a compact disc read-only memory, an optical storage, and the like) including computer-usable program codes.

The present disclosure is illustrated with reference to flowcharts and/or block diagrams of methods, devices (systems), and computer program products of embodiments in the present disclosure. It should be understood that each procedure and/or block in the flowchart and/or block diagram, and combinations of procedures and/or blocks in the flowchart and/or block diagram can be realized through computer program instructions. These computer program instructions may be provided in a general purpose computer, a special purpose computer, an embedded processor, or other programmable data processing devices to produce a machine, which enables the instructions executed by the processor of the computer or other programmable data processing device to produce an apparatus for realizing functions specified in one or more operations of the flowchart and/or one or more blocks of the block diagram.

These computer program instructions may also be stored in a computer-readable memory capable of directing a computer or other programmable data processing devices to operate in a specific manner, such that the instructions stored in the computer-readable memory can produce a manufacture including instruction apparatuses. The instruction apparatuses are configured to realize the function specified in one or more procedures of the flowchart and/or one or more blocks of the block diagram.

These computer program instructions can also be loaded on a computer or other programmable data processing devices, enabling a series of operational steps executed on the computer or other programmable devices to execute a computer-implemented procedure. In this way, the instructions executed on computer or other programmable devices can provide steps for realizing the functions specified in one or more procedures of the flowchart and/or one or more blocks of the block diagram.

Although preferred embodiments of the present disclosure have been illustrated, additional changes and modifications to these embodiments can be made by those skilled in the art if the basic inventive concept is appreciated. Therefore, claims are intended to be construed to cover the preferred embodiments and all changes and modifications within the scope of the present disclosure.

Obviously, those skilled in the art can make various changes and modifications in the present disclosure without departing from the spirit and scope claimed in the present disclosure. If these modifications and variations of the present disclosure fall within the scope claimed in the present disclosure and the equivalent technologies, the present disclosure is also intended to include these modifications and variations.

## Claims

1. A method for controlling an electronic expansion valve of an air conditioner indoor unit, **characterized by** comprising: after an air conditioner is turned on, monitoring an indoor refrigerant change in real time; determining whether an air conditioner outdoor unit enters an oil return state according to the indoor refrigerant change; and when the air conditioner outdoor unit enters the oil return state, adjusting the electronic expansion valve of the air conditioner indoor unit to adapt to the oil return state of the air conditioner outdoor unit.

2. The method for controlling the electronic expansion valve of the air conditioner indoor unit of claim 1, comprising the steps of: monitoring a first change in temperature of an indoor heat exchanger and a second change in temperature of a low-pressure pipe connecting the indoor heat exchanger with a compressor in real time, to determine the indoor refrigerant change; and determining whether the air conditioner outdoor unit enters the oil return state according to the indoor refrigerant change comprises: determining whether any one of the first change and the second change meets a preset condition of the air conditioner outdoor unit entering the oil return state.

3. The method for controlling the electronic expansion valve of the air conditioner indoor unit of claim 2, wherein determining whether the first change meets the preset condition of the air conditioner outdoor unit entering the oil return state comprises: in a cooling mode, acquiring a first temperature of the indoor heat exchanger every first preset time; and between any two adjacent first temperatures, when a decrease value of a latter first temperature compared to a previous first temperature is greater than a first preset threshold, determining that the air conditioner indoor unit enters an oil return state; and/or, in a heating mode, acquiring a second temperature of the indoor heat exchanger every second preset time; and between any two adjacent second temperatures, when an increase value of a latter second temperature compared to a previous second temperature is greater than a second preset threshold, determining that the air conditioner indoor unit enters the oil return state.

4. The method for controlling the electronic expansion valve of the air conditioner indoor unit of claim 2, wherein determining whether the second change meets the preset condition of the air conditioner outdoor unit entering the oil return state comprises: in the cooling mode, acquiring a third temperature of the low-pressure pipe every third preset time; and when an air-out speed of the air conditioning indoor unit remains unchanged, and between any two adjacent third temperatures, a decrease value of a latter third temperature compared to a previous third temperature is greater than a third preset threshold, determining that the air conditioner indoor unit enters the oil return state; and/or, in the heating mode, acquiring a fourth temperature of the low-pressure pipe every fourth preset time; and when the air-out speed of the air conditioning indoor unit remains unchanged, and between any two adjacent fourth temperatures, an increase value of a latter fourth temperature compared to a previous fourth temperature is greater than a fourth preset threshold, determining that the air conditioner indoor unit enters the oil return state.

5. The method for controlling the electronic expansion valve of the air conditioner indoor unit of claim 1, wherein when determining the air conditioner outdoor unit enters the oil return state, adjusting the electronic expansion valve of the air conditioner indoor unit to adapt to the oil return state of the air conditioner outdoor unit comprises: when determining that the air conditioner outdoor unit enters the oil return state in the cooling mode, adjusting an opening degree of the electronic expansion valve of the air conditioner indoor unit according to a first preset parameter; and when determining that the air conditioner outdoor unit enters the oil return state in the heating mode, adjusting the opening degree of the electronic expansion valve of the air conditioner indoor unit according to a second preset parameter.

6. The method for controlling the electronic expansion valve of the air conditioner indoor unit of any one of claims 1 to 5, further comprising: after determining that the air conditioner outdoor unit enters the oil return state, determining whether the air conditioner outdoor unit exits the oil return state according to the indoor refrigerant change; and when determining that the air conditioner outdoor unit exits the oil return state, automatically controlling, by an automatic control program of the electronic expansion valve of the air conditioner indoor unit, the electronic expansion valve of the air conditioner indoor unit.

7. The method for controlling the electronic expansion valve of the air conditioner indoor unit of claim 6, wherein determining whether the air conditioner outdoor unit exits the oil return state according to the indoor refrigerant change comprises: determining whether any one of the first change in temperature of the indoor heat exchanger and the second change in temperature of the low-pressure pipe connecting the indoor heat exchanger with the compressor meets a preset condition of the air conditioner outdoor unit exiting the oil return state.

8. The method for controlling the electronic expansion valve of the air conditioner indoor unit of claim 7, wherein determining whether the first change in temperature of the indoor heat exchanger meets the preset condition of the air conditioner outdoor unit exiting the oil return state comprises: in the cooling mode, acquiring a fifth temperature of the indoor heat exchanger every fifth preset time; and between any two adjacent fifth temperatures, when an increase value of a latter fifth temperature compared to a previous fifth temperature is greater than a fifth preset threshold, determining that the air conditioner indoor unit exits the oil return state.

9. The method for controlling the electronic expansion valve of the air conditioner indoor unit of claim 7, wherein determining whether the second change in temperature of the low-pressure pipe connecting the indoor heat exchanger with the compressor meets the preset condition of the air conditioner outdoor unit exiting the oil return state comprises: in the heating mode, acquiring a sixth temperature of the low-pressure pipe every sixth preset time; and between any two adjacent sixth temperatures, when a decrease value of a latter sixth temperature compared to a previous sixth temperature is greater than a sixth preset threshold, determining that the air conditioner indoor unit exits the oil return state.

10. The method for controlling the electronic expansion valve of the air conditioner indoor unit of claim 6, further comprising: after determining that the air conditioner outdoor unit enters the oil return state, counting an operating time of the air conditioner after the air conditioner outdoor unit enters the oil return state, and determining whether the air conditioner outdoor unit exits the oil return state according to the operating time.

11. The method for controlling the electronic expansion valve of the air conditioner indoor unit of claim 6, wherein the controlling, by the automatic control program of the electronic expansion valve of the air conditioner indoor unit, the electronic expansion valve of the air conditioner indoor unit comprises: when determining that the air conditioner outdoor unit exits the oil return state according to the indoor refrigerant change, adjusting a step of the electronic expansion valve of the air conditioner indoor unit to another step before the air conditioner outdoor unit enters the oil return state, then automatically controlling, by the automatic control program, the electronic expansion valve of the air conditioner indoor unit.

12. The method for controlling the electronic expansion valve of the air conditioner indoor unit of claim 1, wherein the method is applied to the air conditioner in which the air conditioner indoor unit and the air conditioner outdoor unit operate independently of each other.

13. An air conditioner, **characterized by** comprising: a monitoring module, configured to monitor an indoor refrigerant change in real time after the air conditioner is turned on; a determining module, configured to determine whether an air conditioner outdoor unit enters an oil return state according to the indoor refrigerant change; and an adjustment module, configured to adjust an electronic expansion valve of an air conditioner indoor unit to adapt to the oil return state of the air conditioner outdoor unit after determining that the air conditioner outdoor unit enters the oil return state.

14. A device for controlling an electronic expansion valve of an air conditioner indoor unit, **characterized by** comprising a memory, a processor, and a control program of the electronic expansion valve of the air conditioner indoor unit stored in the memory and executable on the processor, wherein when the control program of the electronic expansion valve of the air conditioner indoor unit is executed by the processor, the method for controlling the electronic expansion valve of the air conditioner indoor unit of any one of claims 1 to 12 is implemented.

15. A computer-readable storage medium, **characterized in that**, a control program of an electronic expansion valve of an air conditioner indoor unit is stored in the computer-readable storage medium, when the control program of the electronic expansion valve of the air conditioner indoor unit is executed by a processor, the method for controlling the electronic expansion valve of the air conditioner indoor unit of any one of claims 1 to 12 is implemented.
